# EUROPEAN PATENT APPLICATION

(11) **EP 1 198 101 A1**
(43) Date of publication of application: **17.04.2002**
(21) Application number: 00402829.6
(22) Date of filing: 13.10.2000
(51) Int. Cl.: H04L 29/06, H04L 12/66

(54) **Provisioning mechanism for a service gateway**

(71) Applicant: SUN MICROSYSTEMS, INC., Palo Alto, California 94303 (US)
(72) Inventor: Delisle, Pierre, San Jose, California 95117 (US); Rigori, Serge Andre, 38120 Proveyzieux (FR)
(74) Representative: Harris, Ian Richard

(57) **Abstract**

A services provisioning mechanism is provided for a service gateway connecting at least one local client to an external network. The service provisioning mechanism includes a number of functions. A resolver is provided for responding to a request from a requestor for a service to determine whether a requested service is provided by the service gateway. A negotiator is provided for responding to an indication from the resolver that a requested service is not provided by the service gateway to query an external source for identifying a further service for attempting to satisfy the service request. A response engine is provided for processing information provided by the external source in response to the negotiator query. Services provided by the service gateway can be determined from a registry of services registered at the service gateway. The external source can be a service provider or a service gateway organizer. Different response engines are configured to deal with different messaging protocols that may be used by the service providers and/or the service gateway organizer. The provision of functions for resolving a request, negotiating information and processing the information can each be provided as separate services registered with the service gateway. This modular approach enables the provisioning of services in a flexible and extensible manner.

## Description

### BACKGROUND OF THE INVENTION

The invention relates to the provision of services at a service gateway that connects an external network (e.g., the Internet) to an internal network. A service gateway provides services for local clients for supporting local client systems and devices. A service gateway could be implemented in a network connected computer system or server computer, a router, a set-top box or the like.

The local clients can include a number of devices connected within a local environment. The local environment might, for example, be the home, a workspace, a factory, a farm, a vehicle, or the like. As technology develops, those devices are more and more likely to be supported by a service provider via network links. In order to provide the support, software modules, programs, data, etc, can need to be provided local to the home environment. This can be addressed by providing the software modules, programs, data etc. at a service gateway providing an interface between the local environment and the external network.

A difficulty with this is that different configurations and needs will exist at different client sites. Typically different combinations of equipment will exist at those sites. Also, the configurations and needs will change with time, for example as new versions of software modules come into existence, in order to provide diagnostic functions in response to faults, and as the devices and other systems at the client site change.

In view of this, there is a need to be able to respond to requests that could come from the service provider side, or from the client side, for the provision of new services at the service gateway. The challenge is therefore to provide a mechanism that can enable the loading of services into the service gateway. However, at present, the development of such systems is hampered because developers do not have mechanisms that allow them readily to expand and change the way that services are provided via a service gateway.

The present invention seeks to address this.

### SUMMARY OF THE INVENTION

Particular and preferred aspects of the invention are set out in the accompanying independent and dependent claims. Combinations of features from the dependent claims may be combined with features of the independent claims as appropriate and not merely as explicitly set out in the claims.

In one aspect, the invention provides a service provisioning mechanism for a service gateway connecting at least one local client to an external network. The service provisioning mechanism comprising a number of functions. A resolver is provided for responding to a request from a requestor for a service to determine whether a requested service is provided by the service gateway. A negotiator is provided for responding to an indication from the resolver that a requested service is not provided by the service gateway to query an external source for identifying a further service for attempting to satisfy the service request. A response engine is provided for processing information provided by the external source in response to the negotiator query.

The provision of separate entities for resolving a request, negotiating information and processing the information allows a modular approach to the provisioning of services in a flexible and extensible manner. Each entity provides an interface providing specific roles. For example, the resolver does not need to know about where to find the solution to the provision of services not already provided by the service gateway, this function being provided by the negotiator. Similarly, by providing response engines for processing information received from the external sources, the resolver and the negotiator do not need to know the details of deciphering different protocols that could be used for communication. This arrangement means that embodiments of the invention can readily be configured for different installations and can readily be adjusted to address changes in a given installation.

Services provided by the service gateway can be determined from a record of such services, for example using a registry of services registered at the service gateway. As new services are added or deleted, this can be reflected in the registry.

The resolver can thus determine services at the service gateway by interrogating the service record to determine if the service is provided by the service gateway. If the requested service is provided by the service gateway, a service module for performing the service can be identified to the requestor. If the requested service is not provided by the service gateway, the resolver can then call the negotiator.

The negotiator can be then be responsive to a call from the resolver to identify and query an external source for the identity of a further service to attempt to satisfy the service request.

The negotiator can also be operable, on receipt of a response from the external source, to select the name of a response engine for processing information received from the external source. This can be achieved, for example, by interrogating the header of a response received from the external source to attempt to identify a message protocol for the response. A response engine can then be selected that is configured to process a message formatted in the identified protocol. The service resolver then uses this name to query the registry of services to access the service.

In one embodiment, the service provisioning mechanism is operable within a support framework with each of the resolver, the negotiator and the response engine being services registered with the framework. This embodiment can take advantage of functions of the framework that manage the interrelationships between services and provides a registry of services registered with the service gateway.

Another aspect of the invention provides a computer program product for provisioning services for a service gateway that is operable to connect at least one local client to an external network. The computer program product comprising computer code operable to provide a number of services. A resolver service responds to a request from a requestor for a service to determine whether a requested service is provided by the service gateway. A negotiator service responds to an indication from the resolver service that a requested service is not provided by the service gateway to query an external source for the identity of a further service to attempt to satisfy the service request. A response engine processes information provided by the external source in response to the negotiator service query.

The computer program product can include a carrier medium carrying the computer program code. The carrier medium could be, for example, a storage medium or a transmission medium.

A further aspect of the invention provides a service gateway system configured for connecting at least one local client to an external network, which service gateway system includes a service provisioning mechanism as set out above. The service gateway system can include a processor, memory and computer program code operable to control the processor. The service gateway system can include at least one interface for connection to an external network and at least one interface for connection to a local network to which a plurality of devices is connectable. The service gateway system could be a computer, a set-top box, or indeed any other network-enabled equipment.

Another aspect of the invention provides a method of provisioning services for a service gateway connecting at least one local client to an external network. The method comprises:
responding to a request from a requestor for a service to determine whether a requested service is provided by the service gateway;
where a requested service is not provided by the service gateway, querying an external source for identifying a further service for attempting to satisfy the service request; and
processing information provided by the external source in response to the query.

The provision of separate request resolving, query negotiating and response processing functions of an embodiment of the invention enables a flexible and extensible approach to the provisioning of services at a service gateway.

### BRIEF DESCRIPTION OF THE DRAWINGS

Exemplary embodiments of the present invention will be described hereinafter, by way of example only, with reference to the accompanying drawings in which like reference signs relate to like elements and in which:
Figure 1 is a schematic overview of a network environment including a service gateway;
Figure 2 is a schematic representation of an example of a service gateway system in the form of a set-top box;
Figure 3 is an overview of an exemplary hardware configuration of components of the service gateway;
Figure 4 is a schematic block diagram of a software environment of a services service gateway;
Figure 5 is a schematic block diagram of a software components of the services service gateway;
Figure 6 illustrates a number of stages in an example of operation of an embodiment of the invention; and
Figure 7 is a flow diagram illustrating an example of operation of an embodiment of a service gateway according to the invention.

### DESCRIPTION OF PARTICULAR EMBODIMENTS

Exemplary embodiments of the present invention are described in the following with reference to the accompanying drawings.

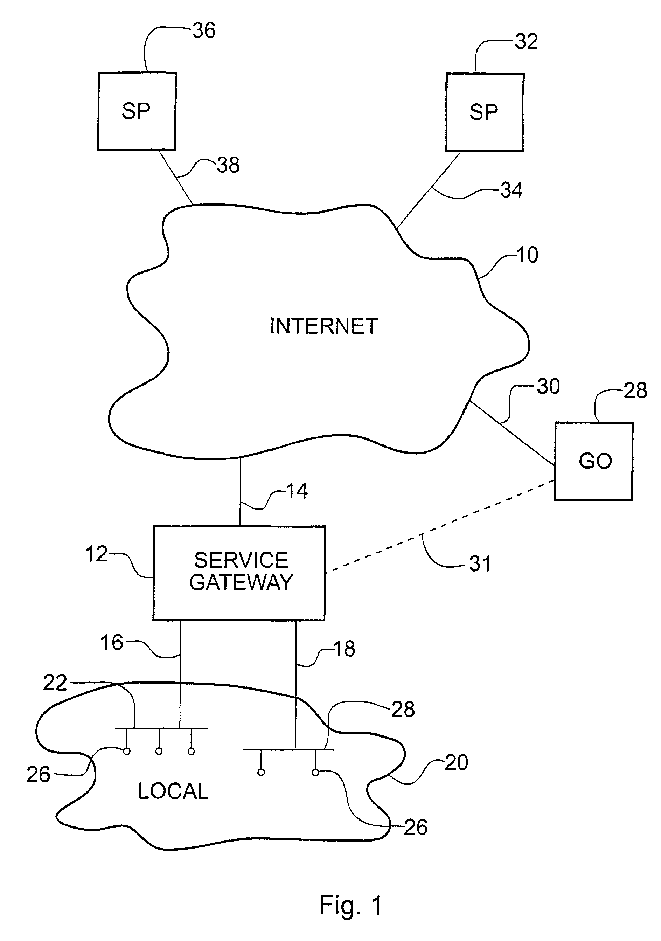

Figure 1 is a schematic representation of an implementation of an exemplary embodiment of the invention.

Figure 1 shows an external network environment (for example the Internet) 10 to which a number of stations are connected. As shown in Figure 1, a service gateway station 12 is connected to the Internet 10 via a connection 14 and provides an interface to a local, or home, environment 20. The service gateway station 12 as shown in Figure 1 supports two local networks in the local environment 20. The service gateway station 12 is connected to the first local network 20 via a connection 16 and to a second local network 24 via a connection 18. In each case, a number of devices are connected to the local networks 22 and 24. The provision of two local networks is merely an example, for illustrative purposes. One or more local networks may be provided. Each of the local networks may support the same or different local protocols for servicing individual devices 26 connected to the local network(s) 22/24.

In a particular example to which the present embodiment relates, the local environment is a domestic environment in the home where a number of domestic devices are connected or connectable to the network. The devices may include complex systems such as computer systems, audio visual equipment, etc, domestic control systems such as security systems, environmental control systems, etc, and all manner of devices which previously have not been network enabled such as white goods (e.g., refrigerators, ovens and other kitchen equipment), and so on.

In other examples the local environment can include one or more of the following, namely a workplace, an office, a factory, a farm, a vehicle, an exhibition site, etc.

A service gateway operator station 28 is connected to the Internet 10 via a connection 30, and is optionally connected directly to the service gateway by a further connection (for example a telephone connection) shown as a dotted line 31. The service gateway operator station 28 is typically operated by a service gateway operator that provides information for control of the service gateway station 12 and provides services (for example as program modules) for defining the functionality of the service gateway station 12.

Two service provider stations 32 and 36 are also connected to the Internet 10 by respective connections 34 and 38. The service provider stations can typically be operated by providers of services relating to the individual devices 26 within the local environment. For example, one service provider can be a manufacturer of audio/visual devices 26 within the local environment and can provide services for supporting those devices. Another service provider can be a manufacturer of white goods forming devices 26 within the local environment 20 and can provide services for supporting those white goods. Examples of possible services are remote diagnostic services, device programming or reprogramming services, etc.

The service gateway operator station 28, and the service provider stations 32 and 36 can be configured as separate computer systems of any suitable type for holding and supplying services in the form of software modules and/or data via the Internet on request. The service gateway operator stations and/or the service provider stations can be implemented by respective web sites provided by the service gateway operator and/or the service providers and/or hosted by a third party. Accordingly, it will be appreciated that the representation of the service gateway operator station 28 and the service provider stations 32 and 36 in Figure 1 is merely as a conceptual source of information which can, in practice, be implemented using any technology. It will be appreciated that, although one service gateway operator 28 and two service providers 32 and 36 are shown, in practice there can be more than one service gateway operator 28 and there will typically be many service providers supporting stations such as the service provider stations 32 and 36 illustrated in Figure 1.

The service gateway station 12 can be implemented as a stand-alone computer, for example a personal computer or another form of computer workstation, or a server computer. Alternatively, it may be implemented by any other piece of network enabled equipment, for example a unit typically described as a set-top box.

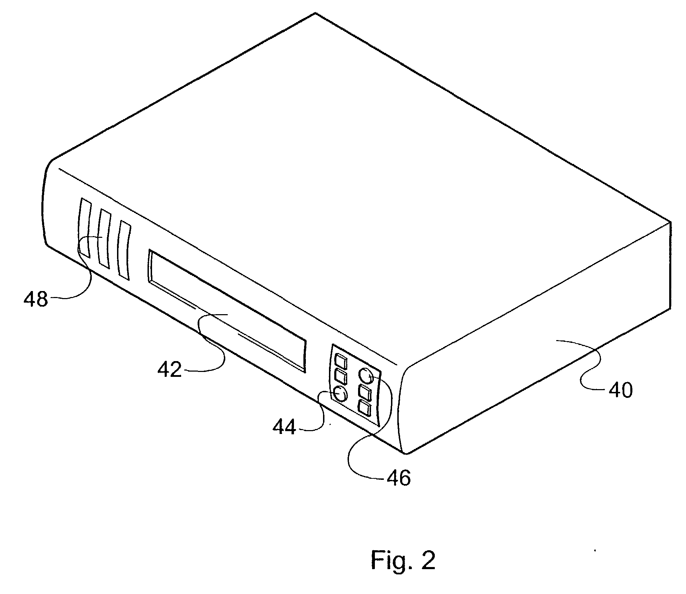

Figure 2 is a schematic representation of such a set-top box 40. As shown in Figure 2, the set-top box 40 includes a display panel 42, input devices including key buttons 44 and a pointing device 46, and an outlet 48 for a loud speaker. The set-top box of Figure 2 can also incorporate a microphone, can be provided with stereo speakers, can be provided with an alternate form of display, and indeed can have a completely different format. Not shown in Figure 2, and typically located at the rear of the set-top box 40, are a number of appropriate connectors for enabling connection of the set-top box to the external and internal networks represented in Figure 1.

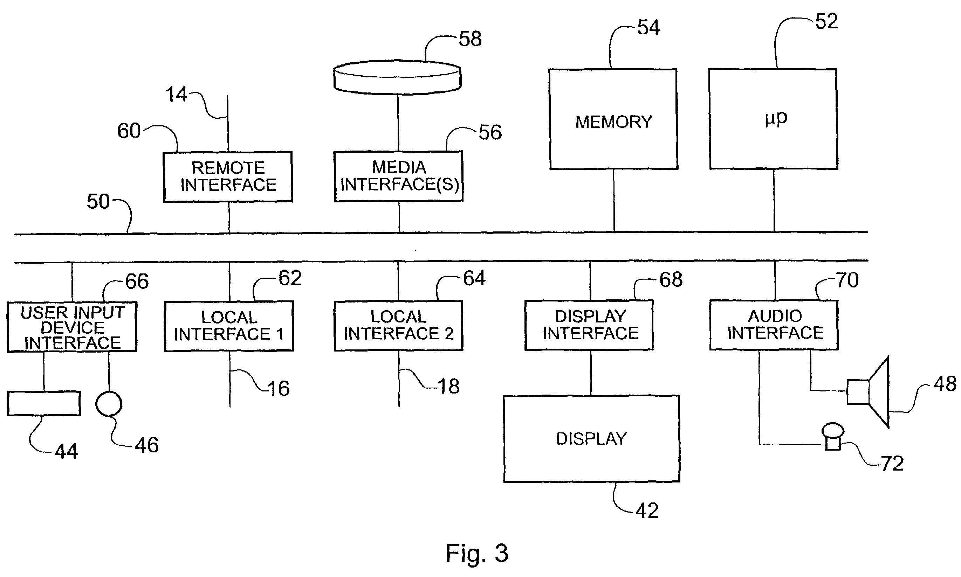

Figure 3 is a schematic representation of an exemplary configuration of components of the set-top box 40 of Figure 2. Thus, as shown in Figure 3, a number of components are connected via a bus 50. A microprocessor or microcontroller 52 is connected to the bus 50 and is able to access random access and/or read only memory 54 that is also connected to the bus 50. A media interface 56 enables the connection of a media drive 58 to the bus 50. A remote interface 60 enables the connection of the bus 50 to the external network via the connection 14. First and second local interfaces 62 and 64 enable the connection to the local networks 16 and 18. It will be appreciated that the illustration of two local interfaces 62 and 64 is by way of example only, and that there may be only one local interface, or there may be more than two local interfaces. Each local interface is arranged to support one or more local network protocols. A user input device interface 66 enables the connection of the keys 44 and the pointing device 46 to the bus 50. A display interface 68 also enables the connection of the display 42 to the bus 50. An audio interface 70 enables the connection of the loud speaker 48 to the bus 50 and optionally enables the connection of a microphone 72 to the bus 50.

It will be appreciated that the configuration shown in Figure 3 is merely an example of a configuration of hardware components within a set-top box 40 as shown in Figure 2. It will also be appreciated that other configurations are possible, including the incorporation of many of the separate units shown in Figure 3 within a single large-scale integrated circuit. Other embodiments may have more than one internal bus 50 to enable different data rates to be supported efficiently between the various components of the set-top box.

It will also be appreciated that a configuration not dissimilar to that shown in Figure 3 can form the basis of an embodiment of the service gateway implemented by means of a personal computer, or the like. In such a case the display interface 68 can support a full size computer display and the user input device interface 66 can support a conventional keyboard and mouse, or the like.

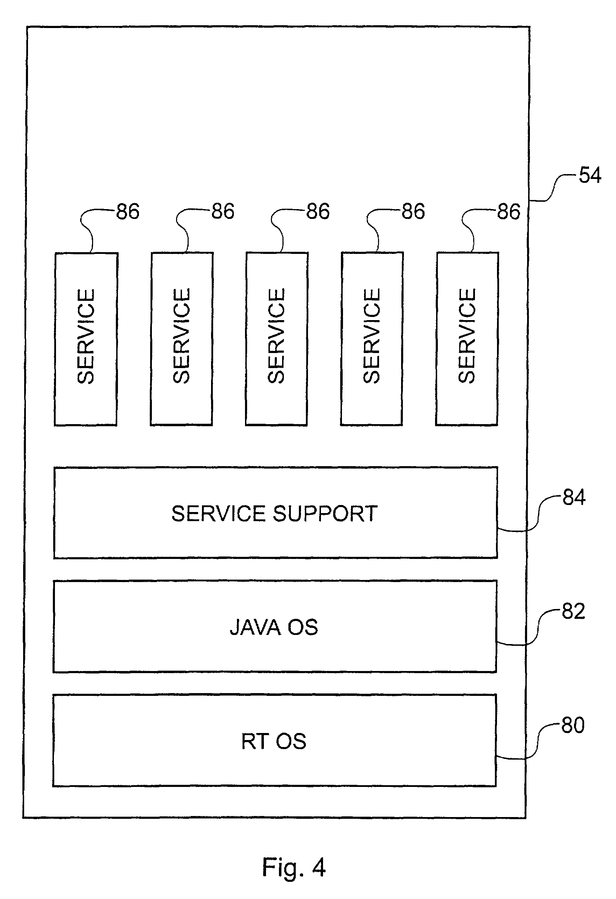

Figure 4 illustrates a number of functional elements provided within the memory 54 of Figure 3 as used for controlling the microprocessor 52. The functional elements shown in Figure 4 are typically implemented by software modules using appropriate programming languages. In the present instance, the present example is based on a basic real time operating system 80. Supported on the real time operating system 80 is a virtual operation system environment, in this example a Java (TM) virtual machine environment 82. A service support framework 84 is configured on the Java virtual machine environment 82. The service support framework 84 supports a variable number of services 86, which services are registered with the service support framework 84.

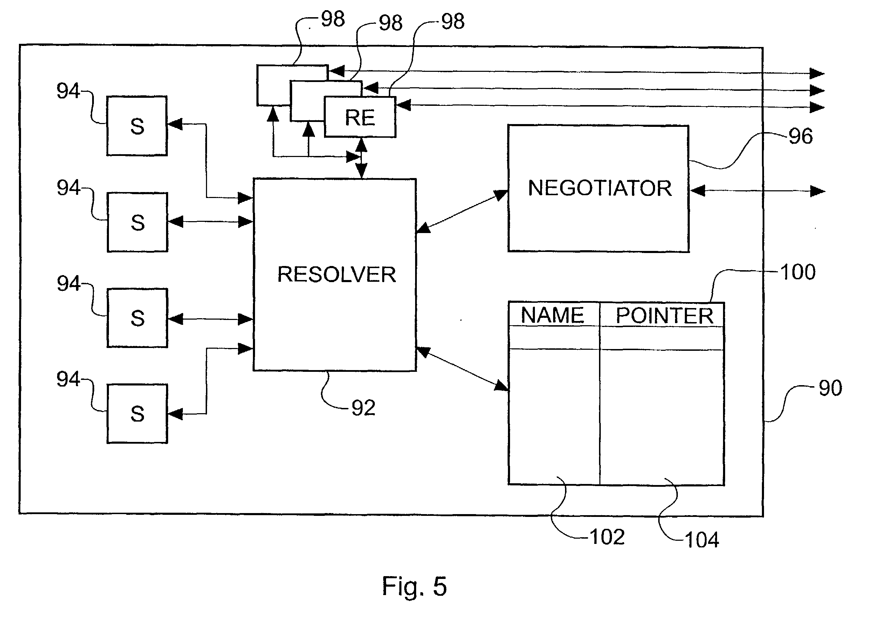

Figure 5 illustrates, in more detail, a number of the software components of an embodiment of a service gateway 90 according to the invention. A service resolver 92 is responsive to requests from individual services 94. A number of such services 94 are provided to support the devices 26 in the local environment 20. A service negotiator 96 is responsive to the service resolver 92 obtain information from a service provider or service gateway operator on request from the service resolver 92. A number of response engines 98 are operable to control the handling of data streams provided by a service provider or service gateway operator. The service resolver 92 refers to and maintains a local service table 100 that links service names 102 to pointers 104 to those services as supported locally. The pointers 104 point to the respective individual services 94 as held within the memory 54 of the service gateway.

It should be noted that each of the services 94, the service resolver 92, the service negotiator 96, and the response engines 98 are registered with the service support framework 84 as services 86 as represented in Figure 4.

In a particular embodiment of the invention, the service support framework 84 is embodied using a "Java Embedded Server" (JES) product. The local services table 100 is then embodied as the JES registry, that is a registry where all JES-enabled services are registered. The Java Embedded Server (TM) product is a small footprint Java (TM) technology-based server for networked devices. The service support framework 84 is called a "ServiceSpace" (TM) and comprises application program interfaces (APIs) for life-cycle management of plug-n-play services and applications. The service support framework 84 provides installation, versioning, content management, monitoring, and service discovery functions. Individual services can include HTTP services, SNMP services, logging, thread management, remote administration, servlet support, etc. Further details of Java Embedded Server (TM) products can be found at
http://www.sun.com/software/embeddedserver/overview/index.html.

An Embedded Server can provide services such as:
a HyperTextTransfer (HTTP) service that allows client services to export their resources via the HTTP protocol;
a Log/Remote Log Service that defines a system log-like interface for logging errors and events;
a Date Service that provides a date (and time) service;
a Connection Manager Service that enables services to interact with a network, including handling socket binding, accepting connections, and unbinding all bound services when stopped by the service support framework;
a Thread Manager Service that provides thread management for the service support framework and its services;
a Scheduler Service that allows client services to schedule events for points in the future;
a Remote Method Invocation (RMI) Service that provides RMI support for bundles and maintains a single RMI registry throughout the service support framework;
a Simple Network Management Protocol (SNMP) Service that acts as an agent between local and remote SNMP entities, such as browsers;
a Console Service that provides remote administration via an applet, with the applet being exported via an HTTP or RMI service, depending on which protocol is chosen;
an HTTP-based implementation of Remote API that provides the back end of a client-server administration capability and exposes the service support framework APIs via HTTP by registering an administration servlet with the HTTP service; and
an RMI-based implementation of Remote API service that provides the back end of a client-server administration capability and exposes the service support framework APIs via the RMI protocol.

The service support framework 84 manages dependency relationships between bundles. For all practical purposes, a bundle is a file that can contain any amount of code or functionality as required. A bundle can be narrowly defined and only contain a limited number of files and functionality, or it can be broadly defined and contain much more. A dependency relationship exists when one piece, or chunk of Java code relies on another piece or chunk of Java code to operate properly. However, the defining detail of a dependency relationship is that the two chunks of code must be in different bundles. For example, the JES core HTTP service is dependent on the connection manager service, because without the connection manager is cannot make HTTP connections. Where both of these services are installed in the service support framework in different bundles, there is a dependency between them. However, if the HTTP service and the connection manager service were packaged together and installed as part of the same bundle, there would be no dependency relationship.

From the above, it can be seen that the service support framework 84 of the environment shown in Figure 4 provides a mechanism for recognizing and monitoring dependency relationships across bundles, including recognizing dependencies, tracking dependencies, making bundles that need each other to be aware of the others' availability, facilitating interactions between dependent bundles, monitoring dependencies across life-cycle events and updating dependencies when they change. An embodiment of the present invention takes advantage of the functionality provided by such a service support framework 84.

Referring once more to Figure 5, the service gateway 90 provides an embedded subsystem in a network environment to connect an external network to internal clients. The service gateway 90 thereby provides an interface between service providers and/or a service gateway operator and local devices held on the client's local system. The service gateway thus separates the topology of the overall environment into an external network environment and an internal network environment. As mentioned above, different types of devices can support the service gateway, including a set-top box, a router, dedicated hardware, a power meter, a personal computer, etc.

As indicated also above, an embodiment of the invention provides three different types of modules in the form of a service resolver 92, a service negotiator 96 and a response engine 98, wherein there may be multiple examples of the response engine 98, with each of those entities being implemented as a service registered with the service support framework 84.

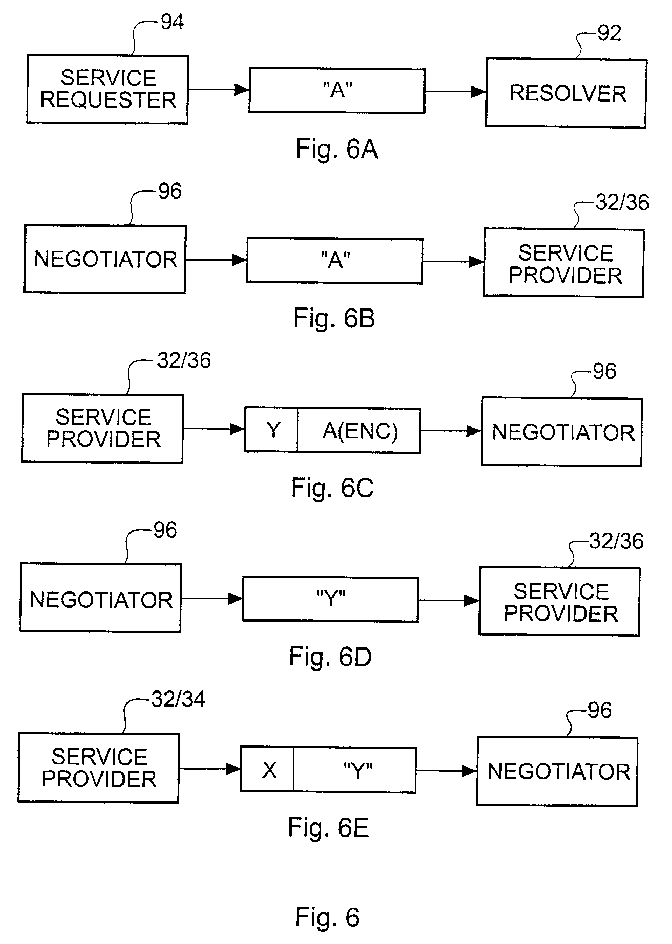

A brief exemplary summary of the operation of an embodiment of the service gateway 90 of Figure 5 will now be described with reference to Figure 6.

When one of the services 94, or another application operating in the local site supported by the service gateway requires another service to carry out a task, that service 94 or application calls the service resolver 92. As a parameter of the call, it is possible to specify a logical name of the service being requested.

Figure 6A represents a request from a requestor service to the service resolver 92 for a service A.

The service resolver 92 then queries the registry 100 (where all the enabled services are registered) to see if the service name "A" is registered.

If the requested service A is found, then the service is returned to the requestor. If, however, the requested service is not found, the service resolver 92 makes use of the service negotiator 96. The service negotiator 96 negotiates the requested service with the service provider by sending an HTTP GET with some additional information on the requested service. Figure 6B represents the sending of a query (HTTP GET) with the requested service name "A".

The service negotiator 96 returns to the service resolver a service name and an input stream that is provided by the service provider. The input stream forms a payload for the response. Figure 6C represents the return of a response from the service provider with a proposed service Y that includes an encoded version of the requested service A A(ENC) as an input stream. Y is the name of the service needed to decode the encoded service A.

The service name can be explicitly provided using a dedicated HTTP header field. The header field can also identify the format of the input stream to be received. If available, the service resolver 92 retrieves the service specified in the response from the service negotiator 96.

The service resolver 92 then employs a response engine 98 appropriate for the protocol of the received information to manage the transfer of the input stream to the identified service.

This is an interactive process. That is to say, if the service having the name specified in the response from the service provider is not locally available in the service gateway 90, the service resolver 92 will once again make use of the service negotiator to obtain a further service for resolving this matter.

For example, if it assumed that the service gateway does not have the service Y for decoding the encoded version of the service A, then a further request can sent to the service provider specifying the service name Y as represented in Figure 6D.

The service provider can then respond by specifying a service X with the code for the service Y as an input stream as represented in Figure 6E. The service X can be the service name for a Zip function for unzipping a zipped up version of the code for the service Y. Let us assume that the unzip service is held by the service gateway.

The service gateway can then operate to use the service X (the unzip service) to unzip the code for the service Y. The service Y can then be used to decode the service A, whereby the service A can then be provided at the service gateway.

It can be seen from this example that an embodiment of the invention can provide a flexible and extensible approach to the provisioning of services at a local service gateway. It can also be seen from this specific example that an embodiment of the invention can provide for the secure communication of software and/or data from a service provider to a service gateway for secure provisioning of services at the service gateway.

The individual functions of the service resolver 92, the service negotiator 96 and the response engine 98 will now be explained in more detail below.

### Service Resolver 92

The service resolver 92 provides a central point of contact for service provisioning in the service gateway. The service resolver 92 is responsible for installing and activating bundles associated with a service description. If a service is not already registered with the service support framework 90 (i.e., its name is not held in the registry 100), then the service resolver 92 is responsible for organizing contact with the service provider or service gateway operator to provision an appropriate service bundle. In order to do this, the service resolver 92 makes use of the service negotiator 96, as described below, in order to obtain instructions from the remote service provider or service gateway operator. It then hands over received instructions to a response engine, as also described below, to process the provisioning instruction. Once an instruction is executed, the resolver queries the service support framework to
check if the service is now available.

A summary of a method for providing the service resolver is set out in Table 1 below:

**TABLE 1**

| Method Summary | |
|---|---|
| com.sun.servicespace.BundleContext | getService(java.net.URL url, com.sun.servicespace.ServiceDescription sd) Get the service associated to the given service description |

More detail of the method or the resolver service is set out in Table 2 as follows:

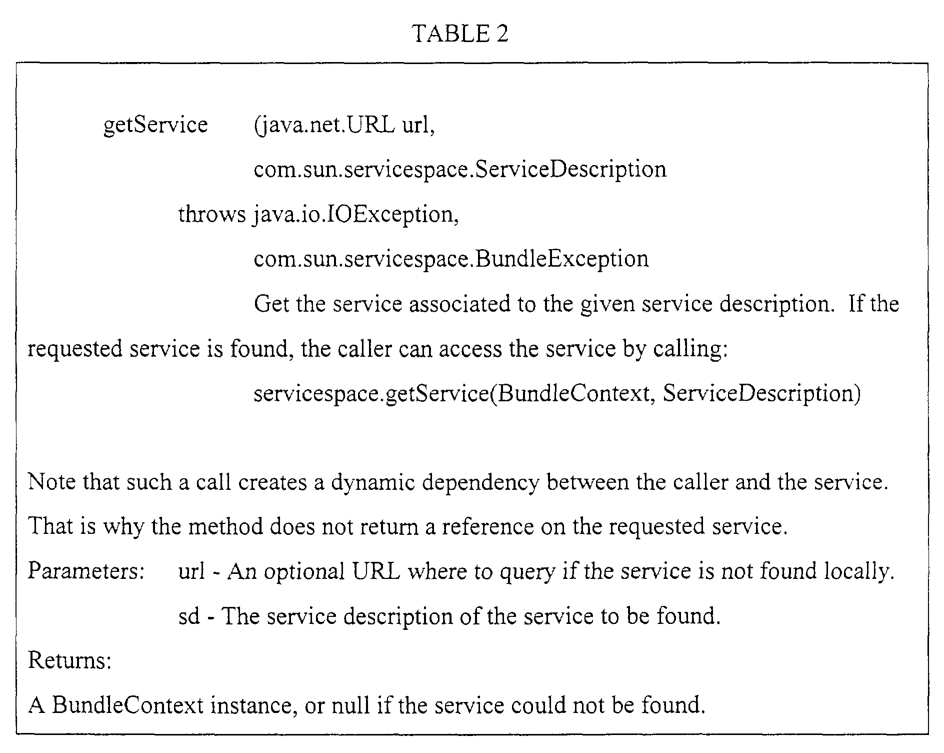

### Service Negotiator 96

The service negotiator 96 is responsible for communicating with an external service provider or service gateway operator. The service negotiator 96 is called by the service resolver 92 if the service resolver 92 needs to find services not currently registered with the service support framework 84.

The service negotiator 96 can be called to invoke services at the service provider or service gateway operator. The service negotiator 96 sends a request to a server for the service provider or service gateway operator. When it receives a response it tries to identify a proper response engine from information in the response header in order to be able to process the response. A response engine as described below is identified by a service description.

The service negotiator 96 is operable to handle communication with the service provider, whereby services supported by the service gateway are not impacted by changes to the communication scheme used for communication with the service provider.

The service negotiator 96 invokes a service provider using either a URL specified in a call to an HTML anchor or a predefined URL.

The service negotiator 96 sends a response to a service provider and identifies a response engine able to handle the response. It then returns an instruction to the service resolver.

The service negotiator 96 expects a response engine to be specified by a specific HTTP header and can be configured using a specific instruction. By default, a header name is "engine".

If no header is present, the service negotiator 96 uses a MIME type of the content that a service provider indicates should be used. For example, the mind types "text/plain" and "text/html" can be supported.

A summary of the method providing a negotiator service is set out in Table 3 below:

**TABLE 3**

| Method Summary | |
|---|---|
| java.lang.String | getServiceProvider ( ) Returns the service provider the negotiator is dealing with |
| NegotiatorService.Instruction | sendRequest (java.net.URL url, java.lang.String requestName, java.util.Properties requestParams) Query the service provider. |

More detail of the methods in the method summary are set out in Table 4 below:

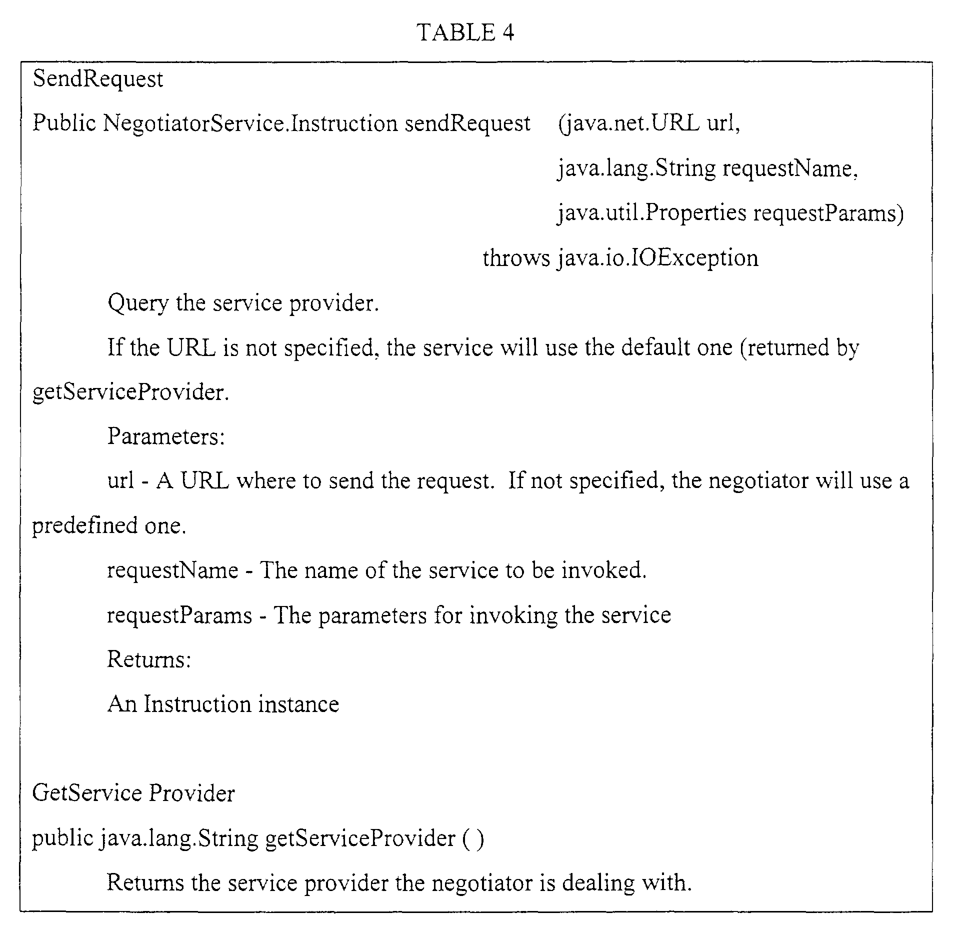

### Response Engine 98

As indicated above, a response engine 98 is responsible for processing an input stream received by a service negotiator. The response engine for processing a response received from a service provider is selected by the service negotiator 96 using the header of the response, as described above. The selected response engine receives an input stream to process. The appropriate choice of response engine enables the service provider and the response engine concerned to agree on the structure of the input stream.

A summary of the method provided by a response engine is set out in Table 5 below.

**TABLE 5**

| Method Summary | |
|---|---|
| java.lang.Object | processResponse (java.net.URL url, java.io.InputStream resource) Handle an input stream received by a negotiator service. |

More detail of the method is set out in Table 6 below:

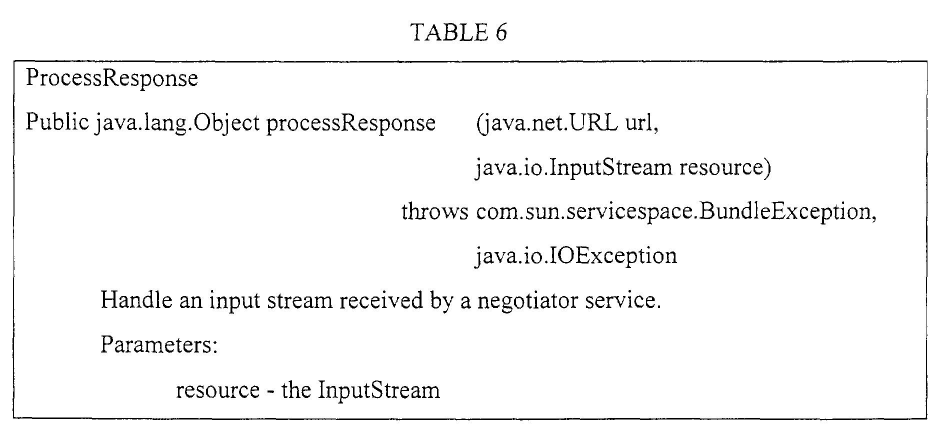

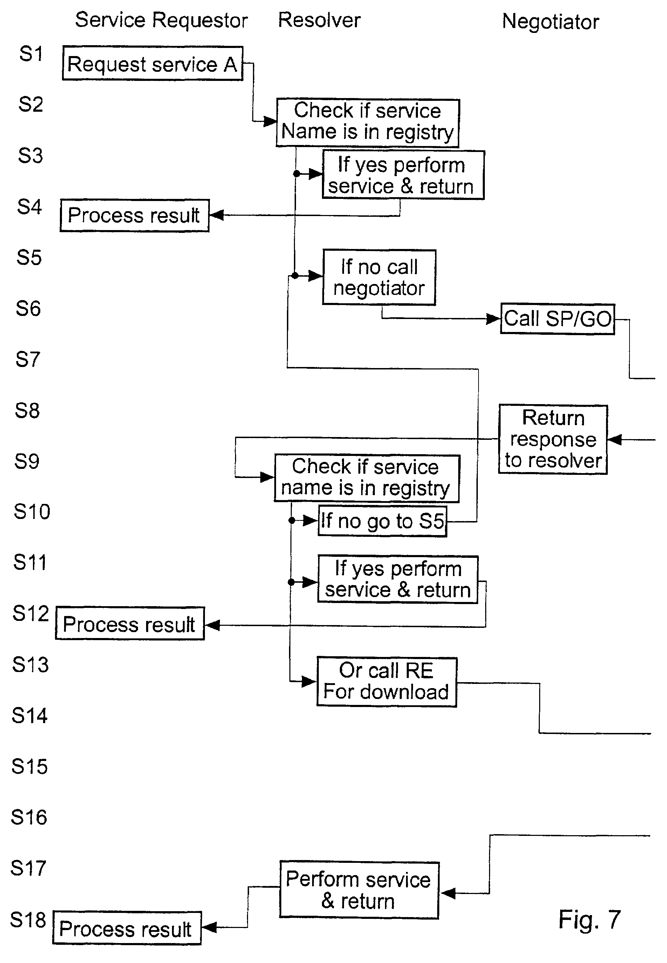

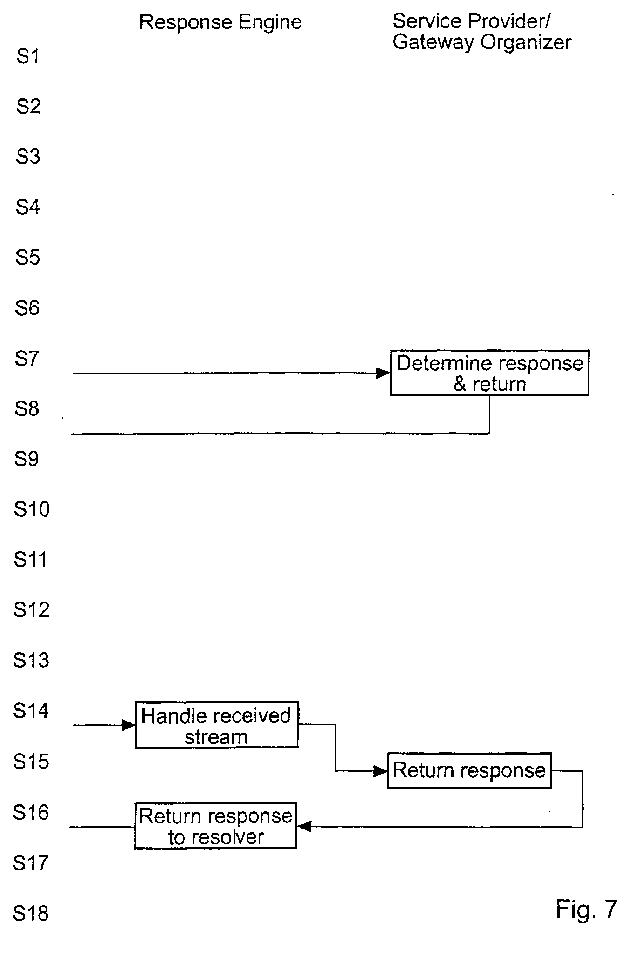

Figure 7 is a flow diagram illustrating the operation of the various services as described above.

In this example, it is assumed that a service registered with the service support framework (hereinafter service requestor) requests a service A. Accordingly, in step S1, the service requestor issues a request for service A to the service resolver 92. In step S2, the service resolver 92 checks whether the service name is held in the registry 100.

In step S3, if the service name is held in the registry 100, the service resolver 92 is operable to return the pointer to that service to the service requestor 94, which is then operable to process call that service in step S4.

If, in step S2, it is determined that the service name is not held in the registry 100, then in step S5, the service resolver 92 issues a call to the service negotiator 96 to request that the service negotiator 96 obtains the service from an appropriate service provider, or the service gateway operator. Accordingly, in step S6, the service negotiator sends a call to an appropriate service provider or service gateway operator. The service negotiator is configured by the gateway operator. In addition, it is possible for a service requestor to query the service resolver with a specific URL, by passing the default configuration to the service negotiator.

In step S7, the service provider or service gateway operator is operable to process the call from the negotiator service, and to return an appropriate response relating to the requested service. In step S8, the service negotiator 96 is operable to receive the response and to forward this to the service resolver 92.

In step S9, the service resolver is operable to check whether a service name in the response provided from the service provider or service gateway operator via the service negotiator is held in the registry 100.

If it is not held in the registry 100, then in step S10, control passes back to step S5, where a further call is made to obtain a further service to resolve the outstanding issues. This loop can continue until it is determined in step S9 that the required service is registered in the service registry 100.

If the service name concerned is registered in the service registry 100 and no further information is required, then in step S11, the pointer to the service is returned to the service requestor which, in step S12, then calls the service to process the result.

Alternatively, if it is determined in step S9 that the service is in the registry and, additionally, it is necessary to obtain a download of an input stream from the service provider, the resolver service then calls in step S13 an appropriate response engine 98 to process the input stream.

The identification of an appropriate response engine 98 is made by the service negotiator 96 on the basis of the header of the response, if specified, and/or on the format of the response. Once the appropriate response engine is identified, the service negotiator builds an instruction for the service provider to execute. The instruction contains a logical name and the input stream to pass over to the identified response engine.

The response engine 98 selected is operable in step S14 to handle the received input stream, including, where appropriate, requesting that input stream from the service provider or service gateway operator.

In this case, the service provider or service gateway operator is responsive to the response engine to return in step S15 the input stream required. The response engine is operable in step S16 to process the received input stream and to return this to the service resolver 92 which forwards the appropriate input stream to the service requestor in step S17.

The service requestor is then operable in step S18 to process the received information.

There has been described, therefore, a services provisioning mechanism for a service gateway connecting at least one local client to an external network. The service provisioning mechanism includes a number of functions. A resolver is provided for responding to a request from a requestor for a service to determine whether a requested service is provided by the service gateway. A negotiator is provided for responding to an indication from the resolver that a requested service is not provided by the service gateway to query an external source for identifying a further service for attempting to satisfy the service request. A response engine is provided for processing information provided by the external source in response to the negotiator query. Services provided by the service gateway can be determined from a registry of services registered at the service gateway. The external source can be a service provider or a service gateway organizer. Different response engines can be configured to deal with different messaging protocols that may be used by the service providers and/or the service gateway organizer. The provision of functions for resolving a request, negotiating information and processing the information can each be provided as separate services registered with the service gateway. This modular approach enables the provisioning of services in a flexible and extensible manner.

The resolver, the negotiator and the response engines are configured as software services registered with the service gateway. These services can be provided as computer programs on a carrier medium. The carrier medium could be a storage medium (such as an optical, a magneto-optical, a magnetic or a solid state storage medium configured as a disk, tape or solid state device, etc), or a transmission medium (such as a telephonic, wireless, copper, optical or other wired medium, etc), or a mixture thereof, as appropriate.

Although particular embodiments of the invention have been described, it will be appreciated that many modifications/additions and/or substitutions may be made within the scope of the invention.

## Claims

1. A service provisioning mechanism for a service gateway connecting at least one local client to an external network, the service provisioning mechanism comprising:
a resolver responsive to a request from a requestor for a service to determine whether a requested service is provided by the service gateway;
a negotiator responsive to an indication from the resolver that a requested service is not provided by the service gateway to query an external source for identifying a further service for attempting to satisfy the service request; and
at least one response engine for processing information provided by the external source in response to the negotiator query.

2. The service provisioning mechanism of claim 1, including a record identifying a service module for performing a service provided at the service gateway.

3. The service provisioning mechanism of claim 2, wherein the record is a registry of services registered at the service gateway.

4. The service provisioning mechanism of claim 2 or claim 3, wherein the resolver is operable to respond to a request for a service by interrogating a service record to determine if the service is provided by the service gateway; and
if said service is provided by the service gateway, to identify to the requestor a service module for performing the service; and
if said service is not provided by the service gateway, to call the negotiator for querying an external source for the identity of a further service to attempt to satisfy the service request.

5. The service provisioning mechanism of any preceding claim, wherein the resolver is an interface service registered at the service gateway.

6. The service mechanism of any preceding claim, wherein the negotiator is responsive to a call from the resolver to identify and query an external source for the identity of a further service to attempt to satisfy the service request.

7. The service provisioning mechanism of claim 6, wherein the negotiator is responsive to a response from the external source to attempt to select a response engine for processing information received from the external source.

8. The service provisioning mechanism of claim 7, wherein the negotiator is operable to interrogate the header of a response received from the external source to attempt to identify a message protocol for the response, whereby the response engine selected is a response engine configured to process a message formatted in the identified protocol.

9. The service provisioning mechanism of any preceding claim, wherein the negotiator resolver is an interface service registered at the service gateway.

10. The service provisioning mechanism of any preceding claim, wherein the response engine is configured to process a message formatted with at least one predetermined protocol.

11. The service provisioning mechanism of any preceding claim, wherein the response engine is an interface service registered at the service gateway.

12. The service provisioning mechanism of any preceding claim, wherein the service provisioning mechanism is operable within a support framework with each of the resolver, the negotiator and the response engine being services registered with the framework.

13. A computer program product for provisioning services for a service gateway that is operable to connect at least one local client to an external network, the computer program product comprising computer code operable to provide:
a resolver service responsive to a request from a requestor for a service to determine whether a requested service is provided by the service gateway;
a negotiator service responsive to an indication from the resolver service that a requested service is not provided by the service gateway to query an external source for the identity of a further service to attempt to satisfy the service request; and
at least one response engine for processing information provided by the external source in response to the negotiator service query.

14. The computer program product of claim 13, wherein the record is a registry of services registered at the service gateway.

15. The computer program product of claim 13 or claim 14 comprising a carrier medium carrying the computer program code.

16. A service gateway system configured for connecting at least one local client to an external network and comprising a service provisioning mechanism according to any one of claims 1 to 12.

17. The service gateway system of claim 16, comprising a processor, memory and computer program code operable to control the processor:
to provide a resolver service responsive to a request from a requestor for a service to determine whether a requested service is provided by the service gateway;
to provide a negotiator service responsive to an indication from the resolver service that a requested service is not provided by the service gateway to query an external source for the identity of a further service to attempt to satisfy the service request; and
to provide at least one response engine that processes information provided by the external source in response to the negotiator service query.

18. The service gateway system of claim 16 or claim 17, including at least one interface for connection to an external network and at least one interface for connection to a local network to which a plurality of devices are connectable.

19. A method of provisioning services for a service gateway connecting at least one local client to an external network, the method comprising:
a) responding to a request from a requestor for a service to determine whether a requested service is provided by the service gateway;
b) where a requested service is not provided by the service gateway, querying an external source for identifying a further service for attempting to satisfy the service request; and
c) processing information provided by the external source in response to the query.

20. The method of claim 19, including determining whether a service is provided by the service gateway by interrogating a record of services registered with the service gateway.

21. The method of claim 19 or claim 20, comprising repeating steps (a), (b) and (c) until a service is found that is supported by the service gateway.

22. The method of any of claims 19 to 21, wherein step (a) includes interrogating a service record to determine if a service is provided by the service gateway;
if said service is provided by the service gateway, identifying to a requestor a service module for performing the service; and
if said service is not provided by the service gateway, passing to step (b).

23. The method of any of claims 19 to 22, wherein step (b) includes identifying and querying an external source for the identity of a further service to attempt to satisfy the service request.

24. The method of claim 23, wherein step (b) further includes responding to a response from the external source to attempt to select a response engine for processing information received from the external source.

25. The method of claim 24, wherein in step (b) the attempt to select a response engine includes interrogating the header of a response received from the external source to attempt to identify a message protocol for the response, whereby the response engine selected is a response engine configured to process a message formatted in the identified protocol.

26. The method of any of claims 19 to 25, wherein step (c) includes processing a message formatted with at least one predetermined protocol.
